# EUROPEAN PATENT APPLICATION

(11) **EP 4 407 247 A1**
(43) Date of publication of application: **31.07.2024**
(21) Application number: 22886646.3
(22) Date of filing: 07.10.2022
(51) Int. Cl.: F24F 11/64, G06F 30/25

(54) **AIRFLOW SIMULATION TERMINAL DEVICE AND AIRFLOW SIMULATION METHOD**

(30) Priority: 29.10.2021 JP 2021177220
(71) Applicant: Nikkiso Co., Ltd., Tokyo 150-6022 (JP)
(72) Inventor: KOBAYASHI, Toshikazu, Tokyo 150-6022 (JP); SUGIYAMA, Hironobu, Tokyo 150-6022 (JP); NAKAMA, Takahiro, Tokyo 150-6022 (JP)
(74) Representative: von Hirschhausen, Helge
(86) International application number: PCT/JP2022/037585
(87) International publication number: WO 2023/074315

(57) **Abstract**

An airflow simulation terminal device 1, which analyzes indoor airflow when an airflow generator 9 for generating an airflow is disposed in a room, is constituted by a portable terminal device integrally comprising: an imaging device 2 for capturing images of the room; a three-dimensional model creation unit 5 for creating a three-dimensional model 10 of the room on the basis of the image data of the room captured by the imaging device 2; and an airflow analysis unit 6 for analyzing indoor airflow when the airflow generator 9 is disposed in the three-dimensional model 10 of the room created by the three-dimensional model creation unit 5.

## Description

### TECHNICAL FIELD

The present invention relates to an airflow simulation terminal device and an airflow simulation method.

### BACKGROUND OF THE INVENTION

Patent Literature 1 describes that photographic data, etc. of an indoor space to be subjected to airflow analysis is input to a dedicated PC (personal computer), the input data is automatically analyzed and saved as three-dimensional CAD data on the PC, and an airflow pattern when an air purifier is placed is analyzed using the three-dimensional CAD data by means of an airflow analysis application. Patent Literature 1 also describes that the PC and a small terminal configured separately from the PC communicates with each other and a maintenance method, etc., for the air purifier based on airflow analysis information is displayed on the small terminal.

### CITATION LIST

### PATENT LITERATURES

Patent Literature 1: JP 2019-76525A

### SUMMARY OF THE INVENTION

In recent years, air purifiers, space sterilization devices, space deodorization devices, etc., which can inactivate allergens or viruses, have been attracting attention as measures against allergens and viruses. Along with this, there is a demand for an easy-to-understand presentation of how much effect is obtained by using the air purifier, etc. In addition, since the effect obtained differs depending on where the air purifier, etc., is placed in the room, people would like to know an appropriate placement position for the air purifier, etc.

It is desired to be able to quickly respond to such demands on-site and improve convenience for users and providers of air purifiers. In other words, there is a demand for a highly convenient device capable of quickly simulating airflow on site when an airflow generator such as an air purifier is placed in an indoor room.

Therefore, it is an object of the invention to provide an airflow simulation terminal device with improved convenience, and an airflow simulation method.

An airflow simulation terminal device in an embodiment of the invention is an airflow simulation terminal device to analyze airflow in an indoor room when an airflow generator that generates airflow is placed in the indoor room, and the airflow simulation terminal device comprises:
a portable terminal device that integrally comprises an imaging device to capture an image of the indoor room, a three-dimensional model creation unit that creates a three-dimensional model of the indoor room based on image data of the indoor room captured by the imaging device, and an airflow analysis unit that analyzes airflow in the indoor room when the airflow generator is placed in the three-dimensional model of the indoor room created by the three-dimensional model creation unit.

An airflow simulation method in an embodiment of the invention is an airflow simulation method for analyzing airflow in an indoor room when an airflow generator that generates airflow is placed in the indoor room, the method comprises:
capturing an image of the indoor room by an imaging device;
creating a three-dimensional model of the indoor room based on image data of the indoor room captured by the imaging device; and
analyzing airflow in the indoor room when the airflow generator is placed in the three-dimensional model of the indoor room created in creating a three-dimensional model, wherein the capturing an image, the creating a three-dimensional model and the analyzing airflow are performed by a portable terminal device.

### Advantageous Effects of the Invention

According to the invention, it is possible to provide an airflow simulation terminal device with improved convenience, and an airflow simulation method.

### BRIEF DESCRIPTION OF DRAWINGS

Fig. 1A is a front view showing an airflow simulation terminal device in an embodiment of the present invention.
Fig. 1B is a rear view showing the airflow simulation terminal device of Fig. 1A.
Fig. 1C is a functional block diagram illustrating the airflow simulation terminal device of Fig. 1A.
Fig. 2 is an explanatory diagram for explaining image capturing in an indoor room to be subjected to airflow analysis.
Fig. 3 is a diagram illustrating an example of a three-dimensional model in which an airflow generator is placed.
Fig. 4 is a diagram illustrating an example of an analysis result of an airflow analysis unit.
Fig. 5 is a flowchart of an airflow simulation method in an embodiment of the invention.

### DETAILED DESCRIPTION OF THE INVENTION

### Embodiment

An embodiment of the invention will be described below in conjunction with the appended drawings.

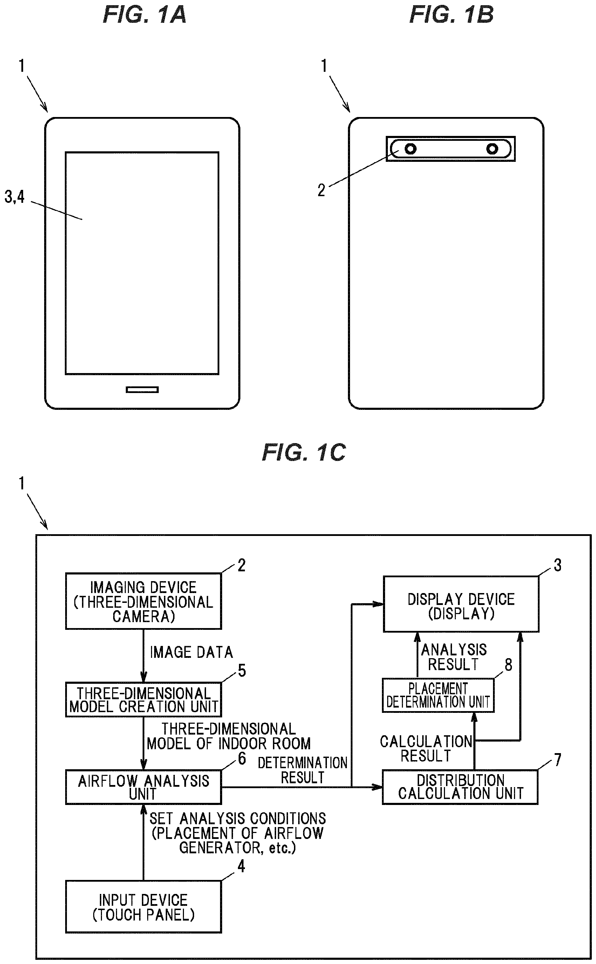

Fig. 1A is a front view showing an airflow simulation terminal device in the present embodiment, Fig. 1B is a rear view thereof, and Fig. 1C is a functional block diagram thereof. An airflow simulation terminal device 1 analyzes airflow in an indoor room when an airflow generator that generates airflow is placed in the indoor room.

As shown in Figs. 1A to 1C, the airflow simulation terminal device 1 is composed of a portable terminal device. The airflow simulation terminal device 1 is a tablet terminal in the example shown in the figure, but it is not limited thereto. The airflow simulation terminal device 1 may be a smartphone, a notebook personal computer or a dedicated mobile terminal, as long as it is a portable terminal device.

The airflow simulation terminal device 1, which is a portable terminal device, integrally includes an imaging device 2 to capture an image of an indoor room, a display device 3, an input device 4, a three-dimensional model creation unit 5, an airflow analysis unit 6, a distribution calculation unit 7 and a placement determination unit 8. The three-dimensional model creation unit 5, the airflow analysis unit 6, the distribution calculation unit 7 and the placement determination unit 8 are realized by appropriately combining an arithmetic element such as CPU, a memory, a storage device, software, etc.

The imaging device 2 is a device to capture an image of an indoor room for modeling the indoor room to be subjected to airflow analysis. As the imaging device 2, it is more desirable to use a three-dimensional camera capable of obtaining information on depth. As the three-dimensional camera, it is possible to use, e.g., a camera which has two imaging elements and is capable of obtaining information on depth based on parallax between the two imaging elements. The imaging device 2 may be configured as an integral part of a tablet terminal, etc., or may be configured to be detachable.

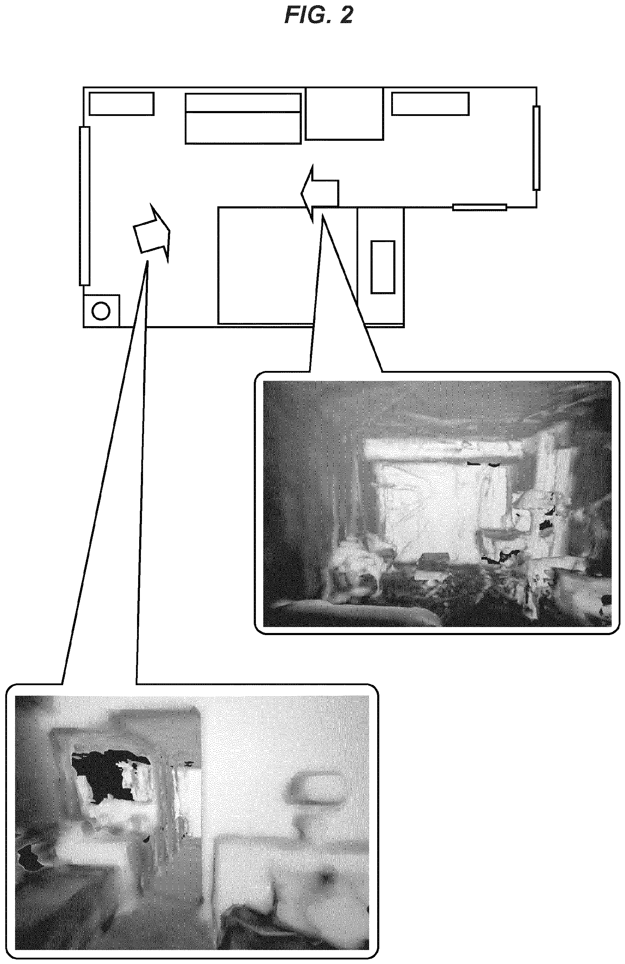

Fig. 2 is an explanatory diagram for explaining image capturing in the indoor room to be subjected to airflow analysis. The white arrows in the drawing show examples of shooting position and direction. A worker performing airflow analysis takes images of the indoor room thoroughly so that sufficient image data to model the indoor room can be obtained. The image data (three-dimensional image data) obtained by the imaging device 2 is output to the three-dimensional model creation unit 5. The configuration may be such that an imaging control unit allowing panoramic images (e.g., 360° rotating images) to be obtained is further included and an obtained panoramic image is used for modeling.

The display device 3 is to display an analysis result of the airflow analysis unit 6, a calculation result of the distribution calculation unit 7 and a determination result of the placement determination unit 8, etc. (which will be described later) and is composed of, e.g., a liquid crystal display. In the present embodiment, a touch panel display which also serves as the input device 4 is used as the display device 3. However, it is not limited thereto, and the input device 4 such as keyboard may be provided separately from the display device 3.

The three-dimensional model creation unit 5 analyzes the shape, etc., of the indoor room based on the image data (the three-dimensional image data) of the indoor room captured by the imaging device, and creates a three-dimensional model of the indoor room. The description of the specific method of creating the three-dimensional model of the indoor room from the image data of the indoor room is omitted here since it is well known. The three-dimensional model creation unit 5 may display the created three-dimensional model of the indoor room. The three-dimensional model creation unit 5 may be configured such that the three-dimensional model displayed on the display unit 3 can be modified by operating the input device 4 (e.g., tap operation or drag operation).

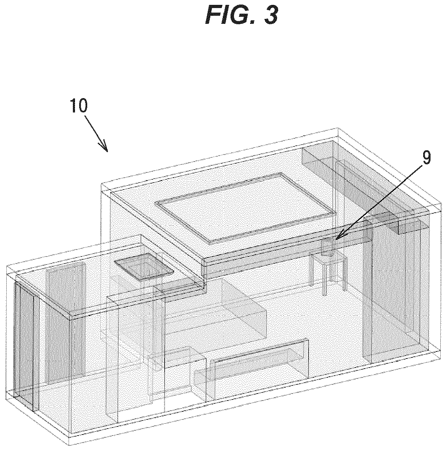

The three-dimensional model creation unit 5 is also configured such that an airflow generator can be placed in the created three-dimensional model of the indoor room by operating the input device 4 (e.g., tap operation or drag operation). Fig. 3 is a diagram illustrating an example of a three-dimensional model 10 in which an airflow generator 9 is placed. The airflow generator 9 is composed of, e.g., any of an air purifier, a space sterilization device, a space deodorization device, a space sterilization and deodorization device, or a humidification and sterilization device. The airflow generator 9 may also include an air blower, a dehumidifier, a humidifier, etc. Furthermore, when there is an indoor unit for air conditioner or a ventilation device, these may be taken into account in the airflow simulation.

It is preferable that the airflow generator 9 be modularized as a 3D model in advance, and the positions of air outlet and inlet ports, air volume and the direction of air be set in advance. This modularized airflow generator 9 is installed in the three-dimensional model 10 by operating the input device 4. Although Fig. 3 shows a case where only one airflow generator 9 is placed in the three-dimensional model 10, plural airflow generators 9 may be placed in the three-dimensional model 10. For example, analysis of airflow in an indoor room with a ventilation device is possible by placing two airflow generators 9, an air purifier and a ventilation device. In addition, although the example in FIG. 3 shows a case where a desktop-type airflow generator 9 is placed, the airflow generator 9 may be of a ceiling-mounted type or a floor-mounted type.

Although not shown in Fig. 3, the three-dimensional model creation unit 5 may be configured such that any object obstructing airflow or an object to be a heat source can be placed by operating the input device 4. In, e.g., analysis of an indoor room where people are in almost fixed positions, such as a conference room or a hospital room, or analysis of an indoor room where electronic equipment that generates a lot of heat is located, etc., more detailed analysis is possible by placing objects to be heat sources at the almost fixed positions of people and the position of electronic equipment, etc. For example, for an indoor room where sunlight enters during the daytime hours, it is possible to analyze airflow for different times of day by, e.g., performing analysis with objects to be heat sources placed in the vicinity of a window.

The airflow analysis unit 6 analyzes airflow in the indoor room when the airflow generator 9 is placed in the three-dimensional model 10 of the indoor room created by the three-dimensional model creation unit 5. The conditions for airflow analysis may be appropriately settable by input from the input device 4. The conditions for airflow analysis include the placement of the airflow generator 9 and the placement of objects obstructing airflow or objects to be heat sources, which are described above. The conditions for airflow analysis may also include, e.g., an open/closed state of a door, or a temperature distribution in a height direction (vertical direction), etc.

In the present embodiment, to evaluate the behavior of viruses in an indoor room, as an example, about one thousand particles (virtual particles) are uniformly placed at a position 30 cm from the floor surface of the three-dimensional model 10, and the behavior of each particle when the airflow generator 9 is driven is analyzed. This is based on the thought that viruses are very light and their movement in the indoor room can be seen as airflow, and also, the viruses fall over time. Desirably, the height from the floor, at which the particles are placed, is preferably a floor or desk, etc. (near the interface). The number of particles may be appropriately set according to the size of the indoor room to be subjected to analysis, and the particles may be countless or may be placed so as to evenly spread all over.

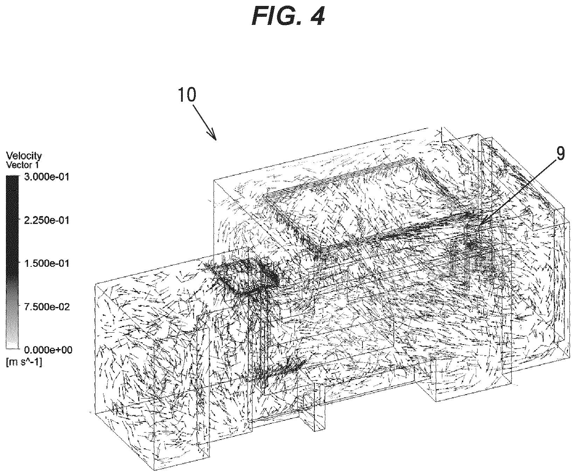

Fig. 4 is a diagram illustrating an example of an analysis result of the airflow analysis unit 6. In Fig. 4, a number of arrows are shown, each representing the flow velocity and direction of each particle. The degree of color shading of arrow represents the flow velocity, and the direction of arrow represents the direction in which a particle flows. The airflow analysis unit 6 analyzes airflow from when the airflow generator 9 started operating until a predetermined analysis time (a period of time the airflow becomes close to a steady state, or a period of time which is set in advance by a worker and allows the particles to sufficiently diffuse in the indoor room) elapses, saves (stores) a result of the analysis and also displays the result on the display device 3. The analysis time may be automatically set by the airflow analysis unit 6 according to the volume of the indoor room to be subjected to analysis and the suction and blowout flow rates of the airflow generator 9. On the display device 3, the behavior of the particles may be displayed by animation corresponding to the passage of time. In addition, although the flow velocity of each particle is represented by the degree of color shading of arrow in Fig. 4, the flow velocity may be represented by the difference in color or the length of arrow. Although the flow velocity of each particle is displayed as the airflow analysis result here, it is not limited thereto. A distribution of pressure in the indoor room may be displayed as the analysis result.

The distribution calculation unit 7 calculates a distribution of at least one of airflow velocity, pressure, temperature, and humidity in the three-dimensional model 10 of the indoor room based on the analysis result of the airflow analysis unit 6. The distribution calculation unit 7 extracts, e.g., the flow velocity of each particle after a lapse of the analysis time from the analysis result of the airflow analysis unit 6, calculates the distribution of the extracted flow velocity, and displays the calculation result on the display device 3. In this regard, the distribution to be calculated is not limited to the distribution of the "flow velocity of each particle after a lapse of the analysis time", and may be, e.g., a distribution of an average value of the flow velocity of each particle or a cumulative value of the flow velocity of each particle, or a distribution of pressure in the indoor room. The display format of the result of calculation by the distribution calculation unit 7 is not particularly limited, and it may be displayed as, e.g., a graph of flow velocity vs. frequency.

The placement determination unit 8 determines the degree of suitability of a placement position of the airflow generator 9 based on the calculation result of the distribution calculation unit 7. In particular, based on, e.g., the flow velocity distribution calculated by the distribution calculation unit 7, the placement determination unit 8 calculates an evaluation score using a predetermined calculation condition. The calculation condition for the evaluation score is not particularly limited, but it is preferable that an appropriate calculation formula, etc. be set so that the score is low when there are more particles with low flow velocity and fewer particles with high flow velocity, and the score is high when there are fewer particles with low flow velocity and more particles with high flow velocity. The placement determination unit 8 displays the calculated determination result (e.g., the evaluation score) on the display device 3. When, e.g., analysis is performed repeatedly with different placements of the airflow generator 9, it becomes easier to grasp the most suitable placement of the airflow generator 9 by including the distribution calculation unit 7 and the placement determination unit 8. Also when, e.g., different airflow generators 9 are used, it is easier to evaluate each of the airflow generators 9.

The placement determination unit 8 may make a determination by comparing two conditions: a state in which doors or windows of a room are open for ventilation, and a state in which the airflow generator 9 is placed and operated with the doors or windows closed. For example, whether the evaluation score is better or worse than the ventilating state may be judged and displayed on the display device 3.

### Airflow simulation method

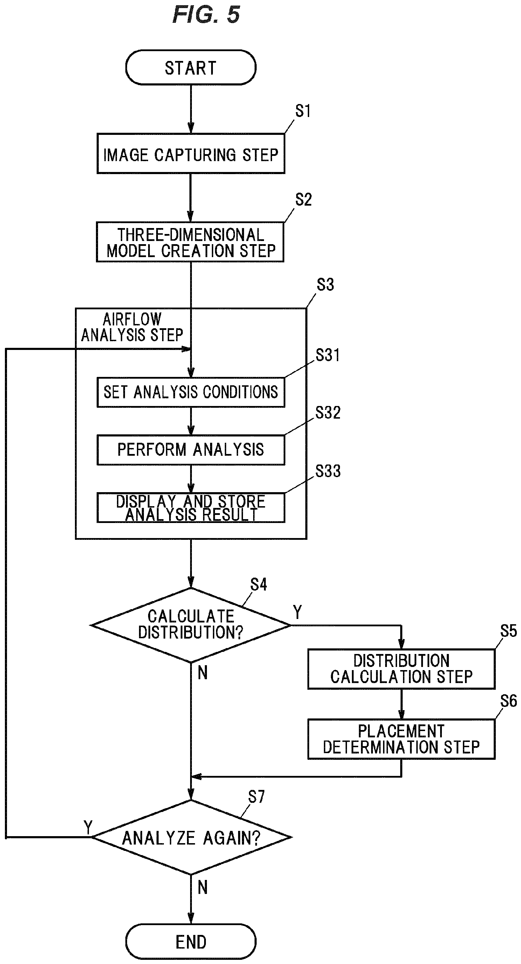

Fig. 5 is a flowchart of an airflow simulation method in the present embodiment. All steps shown in Fig. 5 are performed by the airflow simulation terminal device 1 which is a portable terminal device.

As shown in Fig. 5, first, an image capturing step is performed in Step S1. In the image capturing step, images of the indoor room to be subjected to airflow analysis are captured by the imaging device 2 such as three-dimensional camera (see Fig. 2).

After that, a three-dimensional model creation step is performed in Step S2. In the three-dimensional model creation step, the three-dimensional model creation unit 5 creates the three-dimensional model 10 of the indoor room based on image data of the indoor room captured by the imaging device 2 (see Fig. 3).

After that, an airflow analysis step is performed in Step S3. In the airflow analysis step, first, analysis conditions are set in Step S31. In setting the analysis conditions in Step S31, various settings, including the placement of the airflow generator 9 in the indoor three-dimensional model 10 (see Fig. 3) created in the three-dimensional model creation step, are made by using the input device 4. After that, in Step S32, airflow in the indoor room is analyzed based on the set analysis conditions. After that, in Step S33, the analysis result (see Fig. 4) is displayed on the display device 3 and the analysis result is also stored in a storage device, etc.

After the airflow analysis step, whether to calculate the distribution is determined in Step S4. In Step S4, whether to calculate the distribution is determined based on, e.g., an input from the input device 4. When the determination made in Step S4 is NO, the process proceeds to Step S7. When the determination made in Step S4 is YES, a distribution calculation step is performed in Step S5. In the distribution calculation step, the distribution calculation unit 7 calculates a distribution of the airflow velocity (or pressure) in the three-dimensional model 10 of the indoor room based on the analysis result in the airflow analysis step and displays the distribution on the display device 3.

After that, a placement determination step is performed in Step S5. In the placement determination step, the placement determination unit 8 determines the degree of suitability of a placement position of the airflow generator 9 (e.g., calculates an evaluation score) based on the calculation result of the distribution calculation unit 7, and displays the determination result on the display device 3. After that, the process proceeds to Step S7.

In Step S7, whether to analyze again is determined. In Step S7, whether to analyze again is determined based on, e.g., an input from the input device 4. When, e.g., the location of the airflow generator 9 is changed by operating the input device 4, the determination made is YES. When the determination made in Step S7 is YES, the process returns to Step S3. When the determination made in Step S7 is NO, the process ends.

### Effects and Functions of the embodiment

As described above, the airflow simulation terminal device 1 in the present embodiment is composed of a portable terminal device that integrally includes the imaging device 2 to capture an image of an indoor room, the three-dimensional model creation unit 5 that creates the three-dimensional model 10 of the indoor room based on image data of the indoor room captured by the imaging device 2, and the airflow analysis unit 6 that analyzes airflow in the indoor room when the airflow generator 9 is placed in the three-dimensional model 10 of the indoor room created by the three-dimensional model creation unit 5.

Conventionally, to perform, e.g., three-dimensional model creation and airflow simulation, use of separate services is the only way, which makes airflow analysis work very time-consuming. Therefore, it is not easy to analyze airflow on site. In contrast, in the present embodiment, it is possible to analyze airflow on site using a mobile terminal, hence, an easy-to-understand presentation of, e.g., how much effect is obtained by using the airflow generator 9 such as an air purifier can be provided on site. In addition, the appropriate placement position for the airflow generator 9 depending on, e.g., the shape of the indoor room, etc., can be quickly examined on site, which improves convenience for users and providers of air purifiers, etc. As described above, according to the present embodiment, it is possible to realize the highly convenient airflow simulation terminal device 1 capable of quickly simulating airflow on site when the airflow generator 9 such as an air purifier is placed in an indoor room.

In addition, since viruses are very light and their movement in the indoor room can be seen as airflow, it is possible to accurately simulate the behavior of viruses using the movement of the airflow. Therefore, according to the present embodiment, the behavior of viruses in the indoor room can be quickly analyzed on site.

### Summary of the embodiment

Technical ideas understood from the embodiment will be described below citing the reference signs, etc., used for the embodiment. However, each reference sign, etc., described below is not intended to limit the constituent elements in the claims to the members, etc., specifically described in the embodiment.
(1) An airflow simulation terminal device (1) to analyze airflow in an indoor room when an airflow generator (9) that generates airflow is placed in the indoor room, the airflow simulation terminal device (1) comprising: a portable terminal device that integrally comprises an imaging device (2) to capture an image of the indoor room, a three-dimensional model creation unit (5) that creates a three-dimensional model (10) of the indoor room based on image data of the indoor room captured by the imaging device (3), and an airflow analysis unit (6) that analyzes airflow in the indoor room when the airflow generator (9) is placed in the three-dimensional model (10) of the indoor room created by the three-dimensional model creation unit (5).
(2) The airflow simulation terminal device (1) as defined by (1), comprising: a distribution calculation unit (7) that calculates a distribution of at least one of airflow velocity, pressure, temperature, and humidity in the three-dimensional model (10) of the indoor room based on an analysis result of the airflow analysis unit (6).
(3) The airflow simulation terminal device (1) as defined by (2), integrally comprising: a display device (3) to display the analysis result of the airflow analysis unit (6) and a calculation result of the distribution calculation unit (7).
(4) The airflow simulation terminal device (1) as defined by (3), comprising: a placement determination unit (8) that determines a degree of suitability of a placement position of the airflow generator (9) based on the calculation result of the distribution calculation unit (7), and displays a result of the determination on the display device (3).
(5) The airflow simulation terminal device (1) as defined by any one of (1) to (4), wherein the airflow generator (9) comprises any of an air purifier, a space sterilization device, a space deodorization device, a space sterilization and deodorization device, or a humidification and sterilization device.
(6) An airflow simulation method for analyzing airflow in an indoor room when an airflow generator (9) that generates airflow is placed in the indoor room, the method comprising: capturing an image of the indoor room by an imaging device (3); creating a three-dimensional model (10) of the indoor room based on image data of the indoor room captured by the imaging device (3); and analyzing airflow in the indoor room when the airflow generator (9) is placed in the three-dimensional model (10) of the indoor room created in the creating a three-dimensional model, wherein the capturing an image, the creating a three-dimensional model and the analyzing airflow are performed by a portable terminal device.

Although the embodiment of the invention has been described, the invention according to claims is not to be limited to the embodiment described above. Further, please note that not all combinations of the features described in the embodiment are necessary to solve the problem of the invention. In addition, the invention can be appropriately modified and implemented without departing from the gist thereof.

### REFERENCE SIGNS LIST

1 airflow simulation terminal device
2 imaging device
3 display device
4 input device
5 three-dimensional model creation unit
6 airflow analysis unit
7 distribution calculation unit
8 placement determination unit
9 airflow generator
10 three-dimensional model

## Claims

1. An airflow simulation terminal device to analyze airflow in an indoor room when an airflow generator that generates airflow is placed in the indoor room, the airflow simulation terminal device comprising:
a portable terminal device that integrally comprises an imaging device to capture an image of the indoor room, a three-dimensional model creation unit that creates a three-dimensional model of the indoor room based on image data of the indoor room captured by the imaging device, and an airflow analysis unit that analyzes airflow in the indoor room when the airflow generator is placed in the three-dimensional model of the indoor room created by the three-dimensional model creation unit.

2. The airflow simulation terminal device according to claim 1, comprising:
a distribution calculation unit that calculates a distribution of at least one of airflow velocity, pressure, temperature, and humidity in the three-dimensional model of the indoor room based on an analysis result of the airflow analysis unit.

3. The airflow simulation terminal device according to claim 2, integrally comprising:
a display device to display the analysis result of the airflow analysis unit and a calculation result of the distribution calculation unit.

4. The airflow simulation terminal device according to claim 3, comprising:
a placement determination unit that determines a degree of suitability of a placement position of the airflow generator based on the calculation result of the distribution calculation unit, and displays a result of the determination on the display device.

5. The airflow simulation terminal device according to any one of claims 1 to 4, wherein the airflow generator comprises any of an air purifier, a space sterilization device, a space deodorization device, a space sterilization and deodorization device, or a humidification and sterilization device.

6. An airflow simulation method for analyzing airflow in an indoor room when an airflow generator that generates airflow is placed in the indoor room, the method comprising:
capturing an image of the indoor room by an imaging device;
creating a three-dimensional model of the indoor room based on image data of the indoor room captured by the imaging device; and
analyzing airflow in the indoor room when the airflow generator is placed in the three-dimensional model of the indoor room created in the creating a three-dimensional model,
wherein the capturing an image, the creating a three-dimensional model and the analyzing airflow are performed by a portable terminal device.
